**Europäisches Patentamt**

**European Patent Office**

**Office européen des brevets**

(19)

(11) Veröffentlichungsnummer: **0 288 430 B1**

# EUROPÄISCHE PATENTSCHRIFT

(12)

(45) Veröffentlichungstag der Patentschrift:
**20.06.90**

(21) Anmeldenummer: **88810208.4**

(22) Anmeldetag: **29.03.88**

(51) Int. Cl.⁵: **F16B 7/10**, A47B 9/00,
D05B 75/02

(54) **Sperrmechanismus, insbesondere für die Höhenverstellung von Tischplatten.**

(30) Priorität: **21.04.87 CH 1532/87**

(43) Veröffentlichungstag der Anmeldung:
**26.10.88 Patentblatt 88/43**

(45) Bekanntmachung des Hinweises auf die Patenterteilung:
**20.06.90 Patentblatt 90/25**

(84) Benannte Vertragsstaaten:
**AT BE CH DE ES FR GB GR IT LI LU NL SE**

(56) Entgegenhaltungen:
**CH-A- 319 531
FR-A- 2 398 207
US-A- 4 559 879**

(73) Patentinhaber: **VISITA MTC LTD., Gartenstrasse 3,
CH-7001 Chur(CH)**

(72) Erfinder: **Baudenbacher, Christian, Chalet Wiesenthal,
CH-7299 Fideris(CH)**

(74) Vertreter: **Riederer, Conrad A., Dr., Bahnhofstrasse 10,
CH-7310 Bad Ragaz(CH)**

## Beschreibung

Die Erfindung betrifft einen Sperrmechanismus, um bei einer Bewegung eines ersten Teils einer Vorrichtung, z.B. einer Hubvorrichtung für Tischplatten, in einer ersten Richtung relativ zu einem zweiten Teil der Vorrichtung, diese Bewegung an einer bestimmten Stoppstelle zu stoppen, mit mindestens einem am zweiten Teil angeordneten Anschlagelement zur Festlegung der bestimmten Stoppstelle und einem am ersten Teil angeordneten Sperrglied, welches mit dem Anschlagelement zusammenarbeitet, um den ersten Teil bei einer Bewegung in der ersten Richtung zu stoppen und die Sperrung durch eine Bewegung von vorbestimmtem Ausmass des ersten Teils in einer zweiten, zur ersten Richtung entgegengesetzten Richtung zu lösen und eine ungehinderte Weiterbewegung in der ersten Richtung zu ermöglichen.

Insbesondere bei Nähmaschinenmöbel ist es bekannt, einen absenkbaren Tisch vorzusehen. Auch bei Küchenschränken findet man absenkbare Tische, welche es beispielsweise gestatten, eine Brotschneidmaschine oder eine Universal-Küchenmaschine nach Gebrauch in den Schrank zu versenken. Die Verstellmechanismen für die Tischplatten weisen in der Regel einen Sperrmechanismus auf, dessen Aufgabe es ist, die Tischplatte in der gewünschten Lage zu sperren. Je nach der Art des Verstellmechanismus ist dessen Handhabung etwas unterschiedlich. So gibt es Verstellmechanismen mit oder ohne Federn zur Kompensation des Gewichts. Man unterscheidet dabei Mechanismen mit Ueberkompensation und Unterkompensation des Gewichts. Bei fehlender Gewichtskompensation oder Unterkompensation muss der Sperrmechanismus einen Anschlag aufweisen, der das Absinken der Tischplatte aus der Gebrauchslage verhindert. Wünscht man die Tischplatte abzusenken, so wird sie vorerst leicht angehoben. Dadurch wird der Sperrmechanismus gelöst, und die Tischplatte kann mit der Maschine abgesenkt werden. Bei den Einrichtungen mit Überkompensation des Gewichts hält die Feder die Tischplatte und die Maschine in der Gebrauchsstellung. Zum Absenken wird eine Kraft auf die Tischplatte ausgeübt, welche die Federkraft überwindet. Die Tischplatte wird dann solange abgesenkt, bis der Sperrmechanismus einklinkt und die Tischplatte in der unteren Lage hält. Soll die Tischplatte wiederum in eine obere Stellung gebracht werden, so genügt ein leichtes Absenken der Tischplatte, um den Sperrmechanismus zu lösen. Durch Federkraft wird dann die Tischplatte in die Gebrauchslage gehoben, wo sie durch einen Anschlag fixiert wird. In der Regel ist dieser Anschlag verstellbar, so dass die Arbeitshöhe der Tischplatte den Bedürfnissen der Person angepasst werden kann. Diese Sperrmechanismen haben den Nachteil, dass sie lediglich eine untere und eine obere Lage der Tischplatte ermöglichen. Sie sind auch relativ kompliziert und störungsanfällig.

Die CH-A 319 531 die den Stand der Technik darstellt, offenbart eine Versenkvorrichtung für die Nähmaschine an einem Nähmaschinenmöbel. Eine Schnappklinke ist vorgesehen, welche beim Anheben der Nähmaschine aus ihrer Versenkstellung aus einer ersten Raste bewegt wird und selbsttätig in die zweite oder dritte Raste einfällt, die der unteren und der oberen Arbeitsstellung zugeordnet sind. Dadurch wird die Nähmaschine in der gewünschten Arbeitsstellung abgestützt. Ein oberer Anschlag ist vorgesehen, um beim Anheben der Nähmaschine über ihre oberste Arbeitsstellung hinaus die Schnappklinke in eine derartige Auslösestellung zu bringen, dass die Nähmaschine anschliessend bis in ihre Versenkstellung abgesenkt werden kann, ohne dass die Schnappklinke beim Passieren einer Arbeitsstellung einfällt. Ein unterer Anschlag ist vorgesehen, der beim Absenken der Nähmaschine in die Versenkstellung die Schnappklinke in die Sperrstellung zurückführt, so dass sie bei einem erneuten Anheben der Nähmaschine in die gewünschte Arbeitsstellung in die entsprechende Raste einfällt. Die beschriebene Versenkvorrichtung hat den Nachteil, dass die Nähmaschine nicht aus der unteren Arbeitsstellung in die Versenkstellung gebracht werden kann, ohne dass sie zuerst über die oberste Arbeitsstellung hinausgehoben wird. Besonders nachteilig ist aber, dass ein Absenken von der oberen Arbeitsstellung in die untere Arbeitsstellung nicht möglich ist. Es muss vielmehr die Nähmaschine zuerst über die oberste Arbeitsstellung gehoben, dann in die Versenkstellung gebracht und schliesslich wieder angehoben werden, bis die Nähmaschine wieder die untere Arbeitsstellung erreicht hat. Da so grosse Auf- und Abwärtsbewegungen gemacht werden müssen, besteht noch die Gefahr, dass die untere Arbeitsstellung verpasst wird und das ganze Prozedere noch einmal oder gar mehrmals wiederholt werden muss.

Die FR-A 2 398 207 zeigt eine Vorrichtung, welche die Blockierung von zwei teleskopischen Elementen in verschiedenen Lagen gestattet. Diese Vorrichtung besitzt am beweglichen Element eine Klinke mit einem langen und einem kurzen Zahn. Diese Klinke wird in der Ruhestellung durch eine Feder schräg nach unten gespannt. Am stationären Element befindet sich für jede Blockierstellung ein Stift, an welchem die Klinke einrasten kann. Bei einer Aufwärtsbewegung bewegt der Stift die Klinke im Uhrzeigersinn bis sie durch Federkraft über den kurzen Zahn zurückbewegt wird und der Stift am grossen Zahn anschlägt. Da nun der Stift zwischen beiden Zähnen liegt, wird eine Abwärtsbewegung des beweglichen Elements verhindert. Um eine Abwärtsbewegung zu ermöglichen, muss zuerst eine kurze Aufwärtsbewegung erfolgen, so dass der grosse Zahn die Klinke frei gibt und die Feder diese im Gegenuhrzeigersinn in die Ruhestellung bewegt. Erfolgt jetzt eine Abwärtsbewegung, so liegt der Stift an der Klinke an, und diese wird diesmal im Gegenuhrzeigersinn entgegen der Kraft der Feder bewegt, bis der grosse Zahn die Klinke frei gibt und die Feder diese wieder im Uhrzeigersinn in die Ruhestellung zurückbewegt. Diese Vorrichtung hat den Nachteil, dass bei der Aufwärtsbewegung eine Arbeitsstellung leicht verpasst werden kann. In diesem Fall wird die Klinke durch die Feder statt bloss über den kleinen Zahn auch noch über den grossen Zahn bewegt, so dass der Stift nicht zwischen die beiden Zähne zu liegen kommt und somit eine Abwärtsbewegung nicht verhindert wird. Es bleibt somit nichts anderes übrig, als eine Abwärtsbewegung und wieder eine Aufwärtsbewegung durchzuführen, bis die Klinke über den kleinen Zahn schnappt und der Stift zwischen den grossen und den kleinen Zahn zu liegen kommt.

Allgemein kann zum beschriebenen Stand der Technik noch bemerkt werden, dass die bekannten Sperrvorrichtungen nicht nur relativ kompliziert sind, sondern ausser einer beweglichen Klinke auch noch eine separate Feder benötigen, um die Klinke vorzuspannen.

Es ist daher Aufgabe der vorliegenden Erfindung, einen Sperrmechanismus der eingangs erwähnten Art zu schaffen, der einfach und wenig störungsfällig ist und zudem es ermöglicht, die Tischplatte auf einfache Weise in verschiedene Arbeitsstellungen zu bringen.

Gemäss der Erfindung wird dies durch einen Sperrmechanismus gemäss Patentanspruch 1 erreicht. Dieser Sperrmechanismus ist äusserst einfach. Er benötigt lediglich zwei Teile, die vorteilhaft aus Kunststoff bestehen. Federn sind keine notwendig. Der erfindungsgemässe Sperrmechanismus ermöglicht ein Fixieren des Tisches in verschiedenen Arbeitshöhen. Trotzdem ist die Bedienung einfach. Es ist keine Betätigung eines Bedienungshebels notwendig, sondern es genügt zum Lösen des Sperrmechanismus, je nach der Anordnung desselben, den Tisch entweder ein wenig anzuheben oder ein wenig abzusenken, um ihn dann in die andere gewünschte Lage zu bringen.

Vorteilhaft ist die zweite Kurve weiter so ausgebildet, dass sie bei einer Fortsetzung der Bewegung des ersten Teils in der zweiten Richtung den Steuerarm gegen eine Wandung drückt, wobei das Anschlagelement elastisch verformt wird, um dann bei der Freigabe des Steuerarms zurückzuschnellen und einen Impuls zu verursachen, der das Sperrglied in die Sperrstellung bewegt. Dies hat zur Folge, dass der Steuerarm in eine Stellung gebracht wird, in welcher er bei der Fortsetzung der Bewegung des ersten Teils in der zweiten Richtung beim Auftreffen auf ein weiteres Anschlagelement die Weiterbewegung nicht hindert. Vorteilhaft wird denn auch vorgesehen, dass der Sperrmechanismus mit einer Mehrzahl von hintereinander angeordneten Anschlagelementen versehen ist. Dies ermöglicht es, verschiedene Stoppstellen festzulegen. Für die letzte Stoppstelle kann auch ein gewöhnlicher Anschlag vorgesehen sein. Um die Stoppstelle, also z.B. die Höhe einer Tischplatte genau festzulegen, ist das jeweilige Anschlagelement vorteilhaft verstellbar befestigt. Dazu kann beispielsweise im ersten Teil ein Schlitz für die Befestigungsschrauben vorgesehen sein. Es genügt dann zur Verstellung der Stoppstelle das Lösen der Schrauben, mit denen das Anschlagelement befestigt ist. Hierauf kann das Anschlagelement verschoben und in der gewünschten Lage wieder befestigt werden.

Ein Ausführungsbeispiel der Erfindung wird nun unter Bezugnahme auf die Zeichnung beschrieben.

Es zeigt:

Fig. 1 eine Hubeinrichtung mit einem höhenverschiebbaren ersten Teil und einem stationären zweiten Teil,

Fig. 2 eine Ansicht der Hubeinrichtung von Figur 1, wobei die Führungsschlitze und die Befestigungsschrauben für die Anschlagelemente des Sperrmechanismus ersichtlich sind,

Fig. 3 ein Ausführungsbeispiel des Sperrmechanismus mit zwei Anschlagelementen, einem gewöhnlichen Anschlag und einem Sperrglied,

Fig. 4 eine Ansicht des Anschlagelements von Figur 3 in Richtung des Pfeils IV gesehen,

Fig. 5 eine Ansicht des zweiten Teils mit dem Anschlagelement in Richtung des Pfeils V von Figur 3 gesehen,

Fig. 6 eine Ansicht des Sperrglieds von Figur 3 in Richtung des Pfeils VI gesehen,

Fig. 7 A-E die Bewegungsabläufe bei der Entsperrung und

Fig. 8 A-G die Bewegungsabläufe bei der Sperrung.

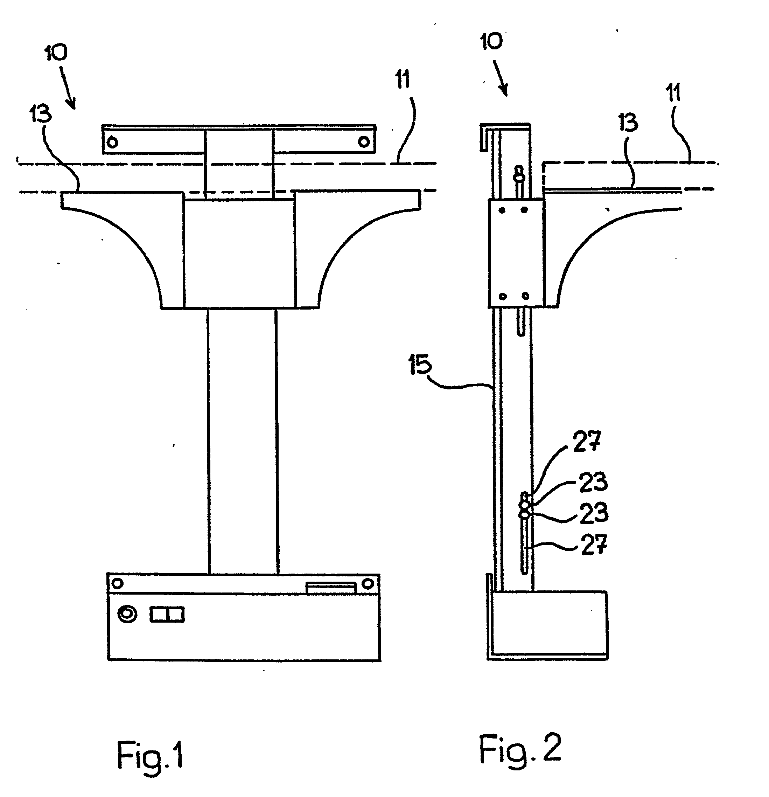

In den Figuren 1 und 2 ist eine Hubvorrichtung dargestellt, mit welcher beispielsweise eine Tischplatte 11 in eine oder mehrere obere Lagen und eine oder mehrere untere Lagen gebracht werden kann. Diese Hubvorrichtung kann beispielsweise in ein Nähmaschinenmöbel eingebaut werden. Die Hubvorrichtung 10 besteht im wesentlichen aus dem stationären zweiten Teil 15 und dem dazu bewegbaren ersten Teil 13, der bei diesem Beispiel die Tischplatte 11 trägt. Eine solche Hubvorrichtung wird beispielsweise in der deutschen Offenlegungsschrift 36 35 700 beschrieben. Die Ausbildung der Hubvorrichtung ist jedoch für das Verständnis der vorliegenden Erfindung nicht von Bedeutung. Es genügt zu wissen, dass bei einer Hubvorrichtung mit Gewichtsüberkompensation der Sperrmechanismus umgekehrt angeordnet werden muss als bei einer Hubvorrichtung ohne Gewichtskompensation oder unvollständiger Gewichtskompensation. Beim nachfolgend beschriebenen Ausführungsbeispiel der Erfindung wird angenommen, dass eine Gewichtsüberkompensation erfolgt, dass also der Tisch 11 mit der darauf angeordneten Maschine oder dergleichen durch eine Kompensationsfeder (nicht sichtbar) in die eingezeichnete Stellung gedrückt wird, wo er durch ein Anschlagelement an der weiteren Aufwärtsbewegung gehindert wird. Das Anschlagelement muss also eine Bewegung nach oben stoppen. Im umgekehrten Fall, also ohne Gewichtskompensation, müsste das Anschlagelement eine Bewegung nach unten stoppen und deshalb um 180° verdreht angeordnet sein.

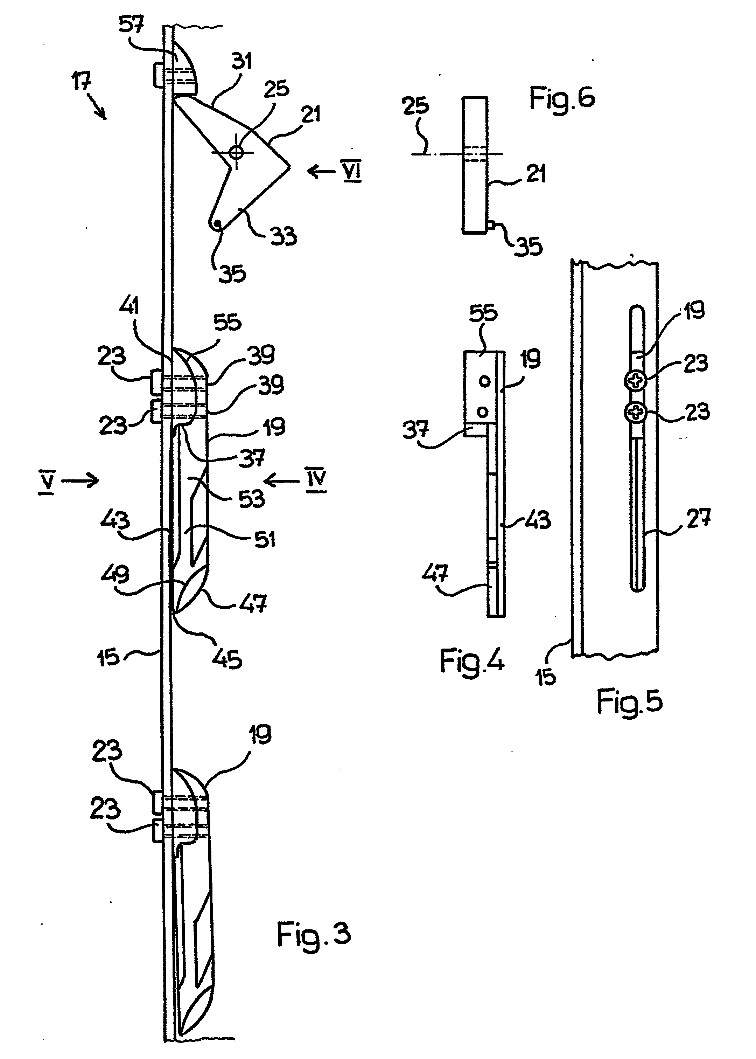

Der Sperrmechanismus 17 nach Figur 3 besitzt mindestens ein Anschlagelement 19 und ein Sperrglied 21. Das Anschlagelement 19 ist mit zwei Befestigungsschrauben 23 am zweiten Teil 15 der Vorrichtung 10 befestigt. Das Sperrglied 21 ist um die Achse 25 verschwenkbar am ersten Teil 13 der Vorrichtung 10 befestigt. Wie bereits mit Bezugnahme auf die Figuren 1 und 2 erwähnt wurde, ist der erste Teil 13 höhenverstellbar. Es ist aber für die Funktion des Sperrmechanismus unerheblich, ob sich der erste Teil 13 oder der zweite Teil 15 bewegt, wesentlich ist lediglich, dass diese Teile 13, 15 relativ zueinander entlang einer Linie beweglich sind. Diese Linie könnte auch kurvenförmig sein, wobei aber bei einem engen Kurvenradius auch die Formgebung von Anschlagelement 19 und Sperrglied 21 entsprechend der Kurve angepasst sein müsste. Wie die Figuren 2 und 5 zeigen, ist ein Befestigungsschlitz 27 für das Anschlagelement 19 vorgesehen. Das jeweilige Anschlagelement 19 kann daher in seiner Lage justiert werden, also beim gezeigten Ausführungsbeispiel weiter nach oben oder nach unten verschoben werden.

Das Sperrglied 21 ist als Hebel, z.B. als Winkelhebel, ausgebildet und besitzt einen Stopparm 31 und einen Steuerarm 33. Am Steuerarm befindet sich ein Stift 35 zur Zusammenarbeit mit Kurven und Führungen des Anschlagelements 19. Das Sperrglied 21 besteht vorteilhaft aus einem Stück Kunststoff, z.B. Nylon. Auch das Anschlagelement 19 besteht vorteilhaft aus einem Stück Kunststoff, z.B. Nylon. Es sollte etwas elastisch verformbar sein. Das Anschlagelement 19 stellt ein längliches Gebilde dar, welches auf der Seite, wo sich der Anschlag 37 befindet, zwei Gewindelöcher 39 zur Befestigung aufweist. Die Befestigungsfläche 41 ist etwas zur übrigen Grundfläche 43 geneigt, so dass zwischen dem Teil 15 und der Grundfläche 43 ein kleiner Spalt 45 entsteht. Durch eine auf die Kurve 47 wirkende Kraft kann daher das Anschlagelement 19 elastisch verformt werden, so dass sich der Spalt 45 schliesst. Umgekehrt kann eine auf die Kurve 49 wirkende Kraft das Anschlagelement 19 so verformen, dass sich der Spalt 45 noch weiter öffnet. Im Anschlagelement 19 befindet sich ein Führungsschlitz 51, welcher gegen den Anschlag 37 hin eine konische Erweiterung 53 aufweist. Am Ende wo es befestigt ist, weist das Anschlagelement 19 eine Kurve 55 auf.

In Figur 3 sind zwei Anschlagelemente 19 dargestellt, welche zwei verschiedene Stoppstellungen definieren. Des weiteren wird noch ein gewöhnlicher Anschlag 57 in der obersten Stellung gezeigt. Es wäre aber möglich, anstelle des Anschlags 57 auch ein Anschlagelement 19 vorzusehen. Des weiteren wäre es möglich, noch weitere Anschlagelemente 19 vorzusehen.

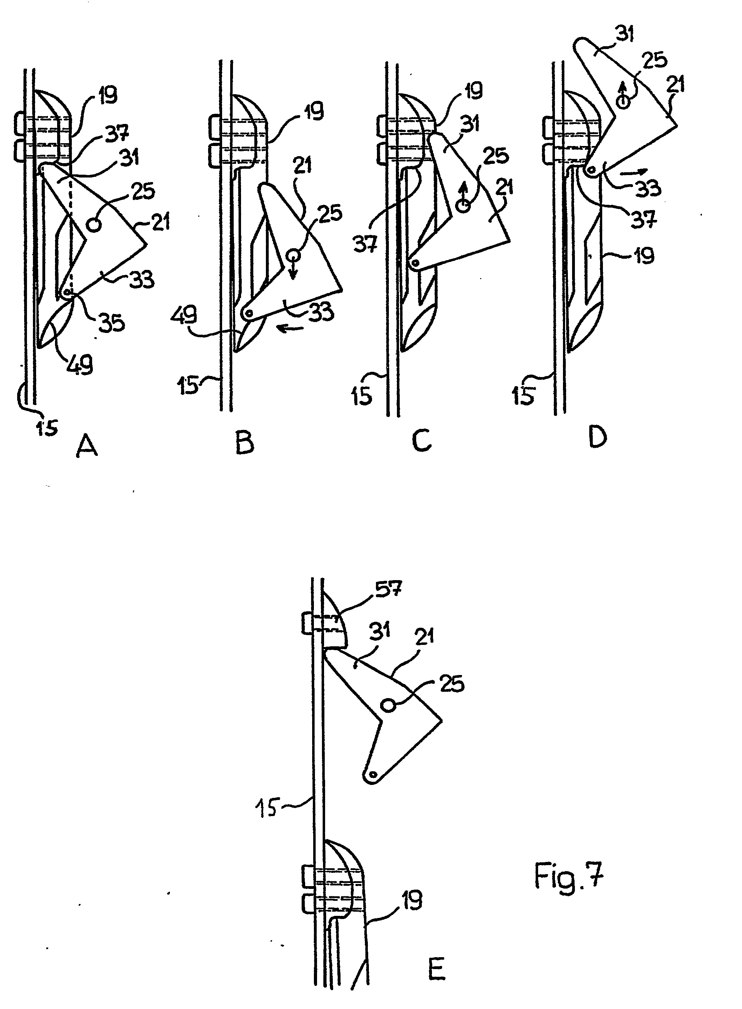

Unter Bezugnahme auf die Figur 7 wird nun gezeigt, wie der Sperrmechanismus entsperrt werden kann. Die Pfeile bei der Achse 25 zeigen die Bewegungsrichtung des ersten Teils 13 (Figur 1) an, an welchem das Sperrglied 21 verschwenkbar befestigt ist. Zum Lösen der Sperrung ist eine kurze Bewegung nach unten nötig. Vor dieser Bewegung liegt der Stopparm 31 am Anschlag 37 an und der Stift 35 befindet sich bei der Kurve 49 (Figur 7A).

Bei der Abwärtsbewegung verschwenkt die Kurve 49 den Steuerarm 33 (Figur 7B). Der Stopparm 31 wird daher aus der Sperrlage gezwungen und kann bei der nachfolgenden Aufwärtsbewegung frei am Anschlag 37 vorbeipassieren (Fig. 7C). Bei der weiteren Aufwärtsbewegung bewegt der Anschlag 37 den Steuerarm 33, so dass der Stopparm 31 wieder in eine Stoppstellung gebracht wird (Fig.

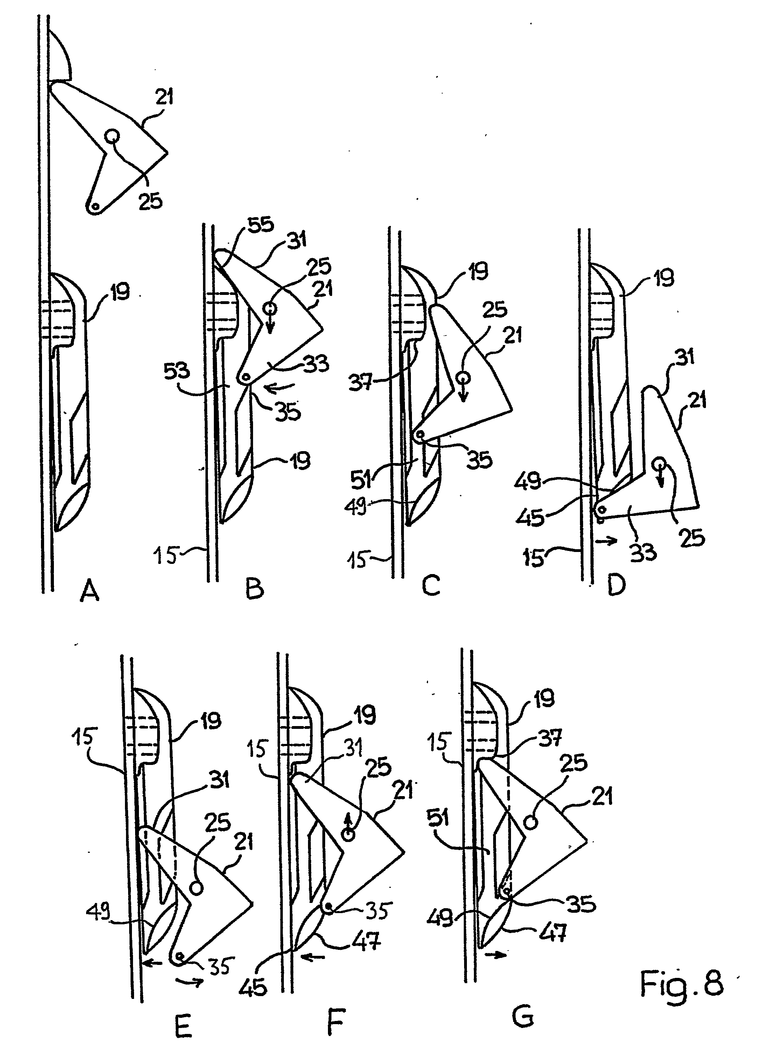

7D) und bei seiner weiteren Bewegung nach oben am Anschlag 57 anschlägt und die Bewegung stoppt (Fig.7E). Wie umgekehrt dann aus der Stellung von Figur 7E in die Stellung von Figur 7A zurückgekehrt werden kann, wird nun in Figur 8 dargestellt.

Wie ersichtlich, entspricht die Anfangsstellung Fig. 8A der Endstellung Fig. 7E und die Endstellung Fig. 8G der Anfangsstellung Fig. 7A.

Bei einer Bewegung nach unten schlägt der Stopparm 31 an die Kurve 55 an, so dass der Steuerarm 33 im Uhrzeigersinn verschwenkt wird und der Stift 35 sicher in die konische Erweiterung 53 gelangt (Fig. 8B). Bei der weiteren Bewegung wird der Stift 35 durch den Führungsschlitz 51 geführt (Fig. 8C) und trifft dann auf die Kurve 49 auf, wird von dieser weiter im Uhrzeigersinn verschwenkt, aber dann durch Anschlagen am Teil 15 an einer weiteren Bewegung gehindert. Das Anschlagelement 19 wird dann etwas verformt, so dass der Spalt 45 vergrössert wird (Fig. 8D). Wenn nun der Steuerarm 33 am Ende der Kurve 49 anlangt, so gibt das Anschlagelement den Stift 35 frei und schnellt wieder in die entspannte Lage zurück. Der dadurch verursachte Impuls reicht in der Regel aus, um das Sperrglied 21 im Gegenuhrzeigersinn in die in Fig. 8E gezeigte Stellung zu bewegen. Bei einer nachfolgenden Aufwärtsbewegung des beweglichen Teils der Hubvorrichtung wird auf jeden Fall durch die Kurve 47 der Stopparm 31 im Gegenuhrzeigersinn bewegt, bis er am Teil 15 anschlägt und dadurch an einer weiteren Bewegung gehindert wird. Da jetzt der Stift 35 fest steht, wird bei der weiteren Aufwärtsbewegung des beweglichen Teils der Hubvorrichtung das Anschlagelement 19 elastisch verformt, so dass der Spalt 45 verkleinert oder aufgehoben wird, wie dies durch den Pfeil angezeigt wird (Fig. 8F). Wenn dann der Steuerarm 33 am Ende der Kurve 47 anlangt, so schnellt das Anschlagelement 19 wieder in die entspannte Lage zurück (Fig. 8G). In dieser Lage befindet sich der Stift 35 bei der Kurve 49. Auf diese Weise wird sichergestellt, dass bei einer Aufwärtsbewegung des beweglichen Teils, wie sie vorher unter Bezugnahme auf Fig. 7B beschrieben wurde, das Sperrglied 21 aus seiner Sperrlage gebracht wird.

Wenn angenommen wird, dass das in Figur 8E dargestellte Anschlagelement 19 dem oberen Anschlagelement 19 von Figur 3 entspricht, so ist ersichtlich, dass aus der Lage von Figur 8E eine weitere Abwärtsbewegung stattfinden könnte, hin zum unteren Anschlagelement 19 von Figur 3. Dort würden dann die Bewegungen stattfinden, wie sie in Bezug auf die Figuren 8B bis G beschrieben wurden. Es ist also wichtig festzustellen, dass der erfindungsgemässe Sperrmechanismus mit einer Mehrzahl von Anschlagelementen verwendet werden kann, um eine Mehrzahl von Stoppstellungen festzulegen.

**Patentansprüche**

1. Sperrmechanismus, um bei einer Bewegung eines ersten Teils (13) einer Vorrichtung (10) in einer ersten Richtung relativ zu einem zweiten Teil (15) der Vorrichtung (10) diese Bewegung an einer bestimmten Stoppstelle zu stoppen, mit mindestens einem am zweiten Teil (15) angeordneten Anschlagelement (19) zur Festlegung der bestimmten Stoppstelle und einem am ersten Teil (13) angeordneten Sperrglied (21), welches mit dem Anschlagelement (19) zusammenarbeitet, um den ersten Teil (13) bei einer Bewegung in der ersten Richtung zu stoppen und die Sperrung durch eine Bewegung von vorbestimmten Ausmass in einer zweiten, zur ersten Richtung entgegengesetzten Richtung zu lösen und eine ungehinderte Weiterbewegung in der ersten Richtung zur ermöglichen, wobei innerhalb des Verstellbereichs der Vorrichtung nach dem Lösen des Sperrglieds (21) eine unbeschränkt grosse Bewegung des ersten Teils (13) relativ zum zweiten Teil (15) in beiden Richtungen möglich ist, dadurch gekennzeichnet, dass das Anschlagelement (19) eine erste Kurve (47) aufweist, welche bei einer Bewegung in der ersten Richtung kurz vor Erreichen der Stoppstellung das Sperrglied erfasst und derart bewegt, dass es beim Erreichen der Stoppstellung an einem Anschlag (37) anschlägt und dass das Sperrglied (21) so angeordnet ist, dass es knapp vor Erreichen der Stoppstellung an einer weiteren Bewegung gehindert wird, so dass das Anschlagelement (19) elastisch so verformt wird, dass es, wenn das Sperrglied (21) am Ende der ersten Kurve (47) angelangt ist, in die entspannte Lage zurückschnellt und dadurch sicherstellt, dass bei einer späteren Bewegung des ersten Teils in der zweiten Richtung das Sperrglied (21) durch eine zweite Kurve (49) geführt und aus der Sperrlage gebracht wird. .

2. Sperrmechanismus nach Anspruch 1, dadurch gekennzeichnet, dass die zweite Kurve (49) so ausgebildet ist, dass sie bei einer Bewegung des ersten Teils (13) in der zweiten Richtung das Sperrglied (21) zu einer Führungsbahn (51) des Anschlagelements (19) bewegt, welche Führungsbahn (51) das Sperrglied (21) am Anschlagen am Anschlag (37) verhindert, wenn eine weitere Bewegung des ersten Teils in der ersten Richtung erfolgt.

3. Sperrmechanismus nach Anspruch 2, dadurch gekennzeichnet, dass die zweite Kurve (49) so ausgebildet ist, dass sie bei einer Fortsetzung der Bewegung des ersten Teils in der zweiten Richtung das Sperrglied (21) gegen eine Wandung (15) drückt, wobei das Anschlagelement (19) elastisch verformt, um dann bei der Freigabe des Sperrglieds (21) zurückzuschnellen und einen Impuls zu verursachen, der das Sperrglied (21) in die Sperrstellung bewegt.

4. Sperrmechanismus nach einem der Ansprüche 1 bis 3, dadurch gekennzeichnet, dass das Sperrglied (21) einen Hebel, z.B. einen Winkelhebel, mit einem Stopparm (31) und einem Steuerarm (33) ist, welcher Hebel (21) mit dem Anschlag (37) und mit mindestens einer der Kurven (47, 49, 55) und/oder Führung (51) des jeweiligen Anschlagelements (19) zusammenarbeitet.

5. Sperrmechanismus nach einem der Ansprüche 1 bis 4, dadurch gekennzeichnet, dass das Anschlagelement (19) aus einem federnden Kunststoff besteht.

6. Sperrmechanismus nach einem der Ansprüche 1 bis 5, gekennzeichnet durch eine Mehrzahl von hintereinander angeordneten Anschlagelementen (19).

7. Sperrmechanismus nach einem der Ansprüche 1 bis 6, dadurch gekennzeichnet, dass ausser mindestens einem Anschlagelement (19) noch ein gewöhnlicher Anschlag (57) vorgesehen ist.

8. Sperrmechanismus nach einem der Ansprüche 1 bis 7, dadurch gekennzeichnet, dass das jeweilige Anschlagelement oder der gewöhnliche Anschlag verstellbar befestigt ist.

**Revendications**

1. Mécanisme de blocage destiné, au cours d'un mouvement d'une première partie (13) d'un dispositif (10) dans une première direction par rapport à une seconde partie (15) du dispositif (10), à arrêter ce mouvement dans une position d'arrêt déterminée, comprenant un élément de butée (19) monté sur la seconde partie (15) pour fixer la position d'arrêt déterminée et un organe de blocage (21) monté sur la première partie (13), organe de blocage qui coopère avec l'élément de butée (19) pour arrêter la première partie (13) au cours d'un mouvement dans la première direction et pour supprimer le blocage par un mouvement d'étendue prédéterminée dans une seconde direction opposée à la première direction, et qui rend possible un nouveau mouvement sans obstacles dans la première direction, un mouvement d'étendue illimitée de la première partie (13) par rapport à la seconde partie (15) dans les deux directions étant possible dans les limites de la plage de réglage du dispositif après la libération de l'organe de blocage (21), caractérisé en ce que l'élément de butée (19) présente une première came (47) qui, au cours d'un mouvement dans la première direction, intercepte l'organe de blocage peu avant que la position d'arrêt ne soit atteinte et le déplace de telle sorte que lorsque la position d'arrêt est atteinte, il heurte une butée (37), et en ce que l'organe de blocage (21) est disposé de telle manière que juste avant que la position d'arrêt ne soit atteinte, il soit empêché de poursuivre son mouvement, ce qui fait que l'élément de butée (19) est déformé élastiquement de sorte qu'il revienne brusquement dans sa position détendue au moment où l'organe de blocage (21) arrive à l'extrémité de la première came (47) et qu'il assure de cette façon que lors d'un mouvement ultérieur de la première partie dans la seconde direction, l'organe de blocage (21) sera guidé par une seconde came (49) et placé hors de sa position de blocage.

2. Mécanisme de blocage selon la revendication 1, caractérisé en ce que la seconde came (49) est réalisée avec une forme telle que lors d'un mouvement de la première partie (13) dans la seconde direction, elle déplace l'organe de blocage (21) vers une glissière de guidage (51) de l'élément de butée (19), glissière de guidage (51) qui empêche l'organe de blocage (21) de heurter la butée (37) lorsque se produit une continuation du mouvement de la première partie dans la première direction.

3. Mécanisme de blocage selon la revendication 2, caractérisé en ce que la seconde came (49) est réalisée avec une forme telle qu'en cas de continuation du mouvement de la première partie dans la seconde direction, elle presse l'organe de blocage (21) contre une paroi (15), l'élément de butée (19) étant alors déformé élastiquement, pour revenir ensuite brusquement lors de la libération de l'organe de blocage (21) et produire une impulsion qui place l'organe de blocage (21) dans la position de blocage.

4. Mécanisme de blocage selon l'une quelconque des revendications 1 à 3, caractérisé en ce que l'organe de blocage (21) est un levier, par exemple un levier coudé comprenant un bras d'arrêt (31) et un bras de commande (33), levier (21) qui coopère avec la butée (37) et avec au moins l'une des cames (47, 49, 55) et/ou la glissière de guidage (51) de l'élément de butée (19).

5. Mécanisme de blocage selon l'une quelconque des revendications 1 à 4, caractérisé en ce que l'élément de butée (19) est fait d'une matière plastique élastique.

6. Mécanisme de blocage selon l'une quelconque des revendications 1 à 5, caractérisé par une multiplicité d'éléments de butée (19) disposés l'un après l'autre.

7. Mécanisme de blocage selon l'une quelconque des revendications 1 à 6, caractérisé en ce qu'outre un élément de butée (19) au moins, il est encore prévu une butée ordinaire (57).

8. Mécanisme de blocage selon l'une quelconque des revendications 1 à 7, caractérisé en ce que l'élément de butée ou la butée ordinaire est fixé de façon ajustable.

## Claims

1. Locking mechanism, which on a movement of a first part (13) of a device (10) in a first direction in relation to a second part (15) of the device (10) stops this movement at a predetermined stopping position, comprising at least one stop element (19) mounted on the second part (15) for fixing the predetermined stopping position, and a blocking member (21) mounted on the first part (13) and cooperating with the stop element (19) for stopping the first part (13) on a movement in the first direction and for releasing the blocking by a movement of predetermined length in a second direction opposite to the first direction, thus permitting an unimpeded movement in the first direction, an unimpeded large movement of the first part (13) with respect to the second part (15) being possible in both directions within the range of adjustment, characterised in that the stop element (19) has a first cam (47), which on a movement in the first direction engages the blocking member shortly before the stopping position and moves it in such a way that it hits a stop (37) on reaching the stopping position, and in that the blocking member (21) is located in such a way that shortly before reaching the stopping position it is prevented to move further, so that the stop element (19) is resiliently so deformed that it snaps into the relaxed condition when the blocking member (21) reaches the end of the first cam (47), thus assuring that on a further movement of the first part in the second direction the blocking member (21) is guided by a second cam (49) and moved out of the blocking position.

2. Locking mechanism as in claim 1, characterised in that the second cam (49) has such a form that on a movement of the first part (13) in the second direction the blocking member (21) is moved to a guide channel (51) of the stop element (19), said guide channel preventing the blocking member (21) to hit the stop (37), if a further movement of the first part in the first direction takes place.

3. Locking mechanism as in claim 2, characterised in that the second cam (49) has such a form that in case of a continuation of the movement of the first part in the second direction, the cam presses the blocking member (21) to a wall (15), thus resiliently deforming the stop element (19), whereupon, on the release of the blocking member (21), an impulse is generated, which moves the blocking member (21) into the blocking position.

4. Locking mechanism as in one of the claims 1 to 3, characterised in that the blocking member (21) is a lever, e.g. a bell crank, comprising a stop arm (31) and a control arm (33), said lever (21) cooperating with the stop (37) and with at least one of the cams (47, 49, 55) and/or the guide channel (51) of the respective stop element (19).

5. Locking mechanism as in one of the claims 1 to 4, characterised in that the stop element (19) is made of resilient plastics.

6. Locking mechanism as in one of the claims 1 to 5, characterised by a plurality of stop elements (19) arranged one after the other.

7. Locking mechanism as in one of the claims 1 to 6, characterised in that in addition to at least one stop element (19) an ordinary stop (57) is provided.

8. Locking mechanism as in one of the claims 1 to 7 each stop element or the ordinary stop are adjustably secured.

Fig.1

Fig.2

57

17

31

25

21

VI

33

35

35

Fig.6

25

21

35

41

55

23

39

39

23

19

37

V

IV

53

43

51

49

47

15

45

55

19

37

43

47

Fig.4

19

23

23

27

15

Fig.5

23

19

23

23

Fig.3

EP 0 288 430 B1

Fig. 7

Fig.8